# EUROPEAN PATENT APPLICATION

(11) **EP 1 522 983 A1**
(43) Date of publication of application: **13.04.2005**
(21) Application number: 04077793.0
(22) Date of filing: 08.10.2004
(51) Int. Cl.: G09B 21/00

(54) **Braille display system**

(30) Priority: 10.10.2003 JP 2003351554
(71) Applicant: ASKK CO.,LTD., Hirakata-Shi, Osaka 573-0128 (JP)
(72) Inventor: Shimamura, Yoshitaka, Katano-shi Osaka 576-0014 (JP); Kajino, Jiro, Neyagawa-shi Osaka 572-0843 (JP); Asao, Tomohiro, Sakai-shi Osaka 593-8301 (JP); Shimizu, Kaoru, Osaka-shi Osaka 535-0021 (JP)
(74) Representative: Kupecz, Arpad

(57) **Abstract**

Internet text information, e-mails or the like is continuously displayed as braille text of arbitrary length without being divided on a row-by-row basis. A structure includes a rotating braille display section (100) for continuously displaying braille by moving a plurality of pins forward and backward over a touch-and-sense surface of a rotating disk, the pins corresponding to 8 to 36 characters, a key input section (200), an external interface section (400), a memory file memory section (300), and a control section (500) for controlling these sections using software. Also included are a unit for connecting an external control device (600) like a personal computer to the external interface section, and a unit for instructing the external control device (600) by operating the key input section (200) to load Internet text information or the like and store the information in the memory file memory section (300) or display the information on the rotating braille display section (100) as braille.

## Description

### Field of the Invention

The present invention relates to a braille display system for visually handicapped people which continuously displays arbitrary braille using six or eight pins. Specifically, the present invention relates to a braille display system for visually handicapped people in which a rotating disk type continuous braille display system and an external control device (hereinafter referred to as a personal computer) are connected together so that a visually handicapped person can control an Internet browser function of the personal computer from the rotating disk type continuous braille display system so as to retrieve text information from home pages and continuously display the information as braille text on the rotating disk type continuous braille display system. Further, the present invention relates to a braille display system that can perform, for example, controllable display and storage of text information downloaded into the rotating disk type continuous braille display system, that is, braille data or text data.

### Background of the Invention

A conventional braille display apparatus uses a row-based display system. Specifically, a predetermined number of braille display sections are arranged, each of which electrically and mechanically projects six or eight pins to display a row of characters. A visually handicapped person traces the display sections to sense (read) the characters. Thus, the sensing of a continuous sentence is interrupted between rows. Further, a visually handicapped person may have stiff shoulders after the operation of tracing braille. Moreover, the required number of actuators, which drive the braille pins to move up to a predetermined projection height from a touch-and-sense surface and then down to the surface, is the same as that of the characters contained in one row. Thus, there has been a problem that the device is heavy and expensive.

As a patent document on an information processing apparatus for visually handicapped people, JP2002-032013A proposes an information providing system for distributing various information for visually handicapped people by utilizing a telecommuincation line represented by the Internet.

As another patent document, JP2002-366024A proposes an information processing apparatus for visually handicapped people, which comprises a communication device that establishes a connection with a server for providing information distribution services over the Internet, a control device connected to the communication device, and a braille display terminal connected to the control device. This information processing apparatus receives, over the Internet, an electronic document containing a document shaping command, and if the received text information contains an instruction statement to display image information, an electronic document is created a new which excludes such instruction statement to display image information. The information processing apparatus then displays the text information on the braille display system.

As another pa tent document,JP07-160192A proposesabraille output apparatus which outputs text data as braille data on a row-by-row basis and which comprises a row stopper for stopping the following text data from being displayed until a relevant instruction is given.

As still another patent document, JP11-288364A proposes an apparatus in which an OCR is used to analyze information, and text data thus obtained is outputted to and displayed on an output device. Subsequently, display contents thus outputted and displayed are outputted to a voice synthesizer and a braille display unit.

As still another patent document, JP06-231082A proposes an apparatus in which when a storage medium having a book data is inserted into an external storage device, a control unit operates to load the book data into a work RAM in accordance with a procedure stored in a ROM, and converts the loaded contents into a braille pattern with reference to a braille font ROM. Subsequently, the converted braille pattern is transferred to a braille display VRAM. Moreover, the apparatus functions, for example, to generate and check underlines and execute retrievals.

However, according to the conventional inventions disclosed in the above described patent documents, if text information obtained through the Internet or the like is displayed as braille, a continuous sentence is interrupted between rows, so that a user needs to touch and sense the braille on a row-by-row basis to read such document. This prevents the user from continuously touching and sensing the text information as a braille sentence of an arbitrary length.

Further, according to the inventions disclosed in the above described patent documents, the following means are not provided, that are, a unit for stopping display of a continuous text information at an arbitrary position in a braille display section, a step display unit for displaying braille on a character-by-character basis, a step backward unit for allowing a backward movement of the braille display section on a character-by-character basis to enable backward reading, a unit for setting a jump destination mark at a book mark point in continuous text information, a unit for allowing the text information to be skipped over to the jump destination at the book mark point, a unit jump unit for allowing the text information to be skipped over or read backward on a page-by-page, word-by-word, or specific cell-by-cell basis, and a unit for allowing the text information to be read backward on a word-by-word basis.

### Disclosure of the Invention

The present invention provides a braille display system that enables a user to continuously sense, as braille sentences of arbitrary lengths, text information from, for example, home pages or e-mails over the Internet. Further, it is an object of the present invention to install a recording medium containing book data in the braille display system of the invention so that information from the recording medium can be freely put into braille to be touched and felt. Furthermore, the present invention enables text information from home pages or sentences inputted using braille input keys to be stored in a built-in memory, which can then be carried by a user. It is another object of the present invention to enable a user to touch and sense text information obtained from an external control device, starting at an arbitrary position of the sentence at an arbitrary braille display speed.

To accomplish the objects, a braille display system according to an aspect of the present invention preferably comprises a rotating braille display section that moves pins forward to and backward from a touch-and-sense surface of a rotating disk to continuously display braille, a key input section, an external interface section, a memory section, and a control section that controls these sections using software.

Preferably, the number of braille characters mounted on the rotating disk is, for example, 8 to 36. Therefore, the number of pins for displaying braille characters is 48 to 216.

In the braille display system according to the aspect of the present invention, the external interface section is preferably connected to an external control device such as a personal computer, a cellular phone, a PDA, an automatic cash transaction device, a ticket machine, a vending machine, an electronic book reader, a facsimile machine, a braille learning machine, an electronic voting device, or a navigation device. And the key input section is operated to transmit a text information request command to the external control device so that text information obtained on the Internet or text information from e-mails is loaded from the external control device and stored in the memory section, and the text information is outputted as braille in a rotating braille display section.

Preferably, the system further comprises a unit for loading text information from the external control device and outputting braille to the rotating braille display section, by operating the key input section, a unit for loaing text information from the external control device and storing the loaded text information in the memory section, by operating the key input section, a units for calling the text information from the memory section and displaying the braille on the rotating braille display section, by operating the key input section, a unit for editing text information by operating the key input section, a unit for creating braille data by operating the key input section, and a unit for creating braille data and storing the created braille data in the memory section, by operating the key input section.

Preferably, the system further comprises a unit for stopping the rotating braille display section at an arbitrary position during rotating drive by operating the key input section, a unit for moving the rotating braille display section forward (forward rotation) on a character-by-character basis by operating the key input section, and a unit for moving the rotating braille display section backward (reverse rotation) on a character-by-character basis by operating the key input section.

Preferably, the braille display system according to the present invention further comprises, for example, a unit for setting a jump destination in loaded text information, a unit for allowing the text information to be skipped over to the jump destination, a unit fort allowing the text information to be skipped over on a word-by-word basis, and a unit for allowing the text information to be read backward on a word-by-word basis.

Moreover, the key input section preferably comprises a plurality of braille data input keys, a plurality of function keys for operating various functions, a rotation speed control key for controlling a braille speed, and a function mode key with which a system operator such as a visually handicapped person can check the state of text information processing and select a function. The function mode is preferably switched among, for example, four types including Internet, e-mail, scratch pad, and book reading.

With the above configuration, the braille display system according to the present invention allows an operator to continuously touch and sense the text information from, for example, Internet home pages as braille sentences of arbitrary lengths simply by placing the operator's finger on the rotating disk without a need to move the finger. Further, the operator can convert information from an information recording medium into braille to be touched and sensed, by loading book data or the like from the information recording medium into the braille display system of the present invention via the personal computer. Moreover, by installing an information recording medium in the braille display system of the present invention, the information from the recoding medium may be freely put into braille to be touched and sensed. Further, home page text information, sentences inputted with braille input keys, book data and the like may be stored in a built-in memory and carried. Furthermore, the operator can touch and sense the text information starting at an arbitrary text position at an arbitrary braille display speed. This realizes provision of barrier-free information and promotion of social participation by visually handicapped people.

Moreover, the rotating braille display section can form braille characters using only three actuators. This realizes reduction in the size and weight of the system and in the number of parts required. For example, the following values, for example, have been accomplished for the outside dimensions of the braille display system according to the present invention: a width of 210 mm, a depth of 130 mm, a maximum height of 30 mm, and a weight of 450 g.

### Brief Description of the Drawings

FIG. 1 is a block diagram of hardware of a braille display system according to a first embodiment of the present invention;
FIG. 2 is a conceptual plan view of a rotating braille display section shown in FIG. 1;
FIG. 3 is a perspective external view of the braille display system according to the embodiment;
FIG. 4 is a block diagram showing an operation of the braille display system according to the embodiment;
FIG. 5 is a diagram illustrating braille display data and a controlling method of the braille display system according to the embodiment;
FIG. 6 is a flow chart showing how to control display in the braille display system according to the embodiment;
FIG. 7 is a block diagram showing an operation of the braille display system when connected to an external control device according to the embodiment;
FIG. 8 is a diagram illustrating how to set control information and store braille data according to the embodiment;
FIG. 9 is a block diagram showing an operation of a braille display system according to a second embodiment of the present invention; and
FIG. 10 is a block diagram showing an operation of the braille display system when connected to an electronic apparatus according to the second embodiment.

### Description of Preferred Embodiments

### (Embodiment 1)

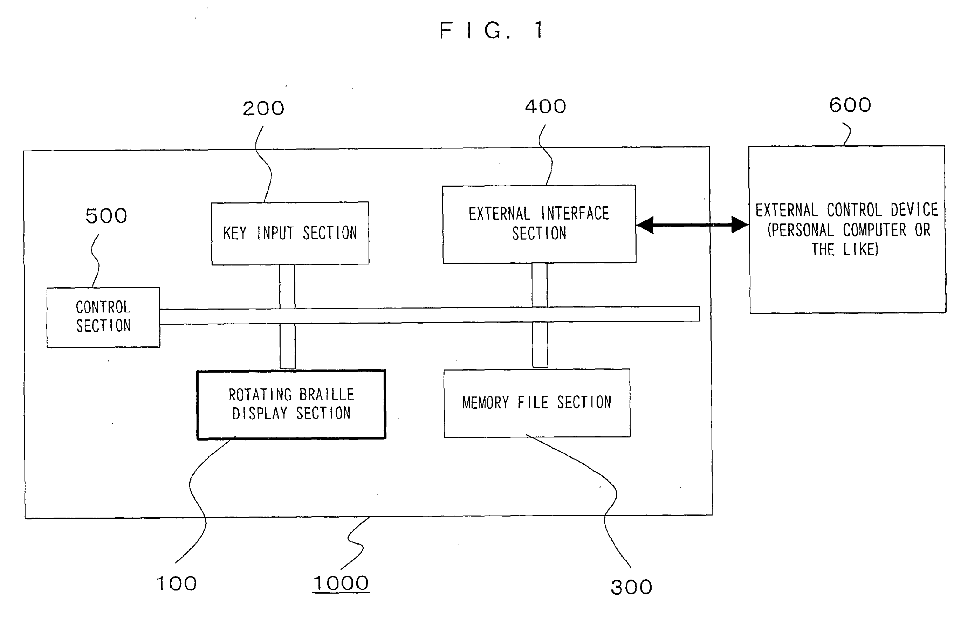

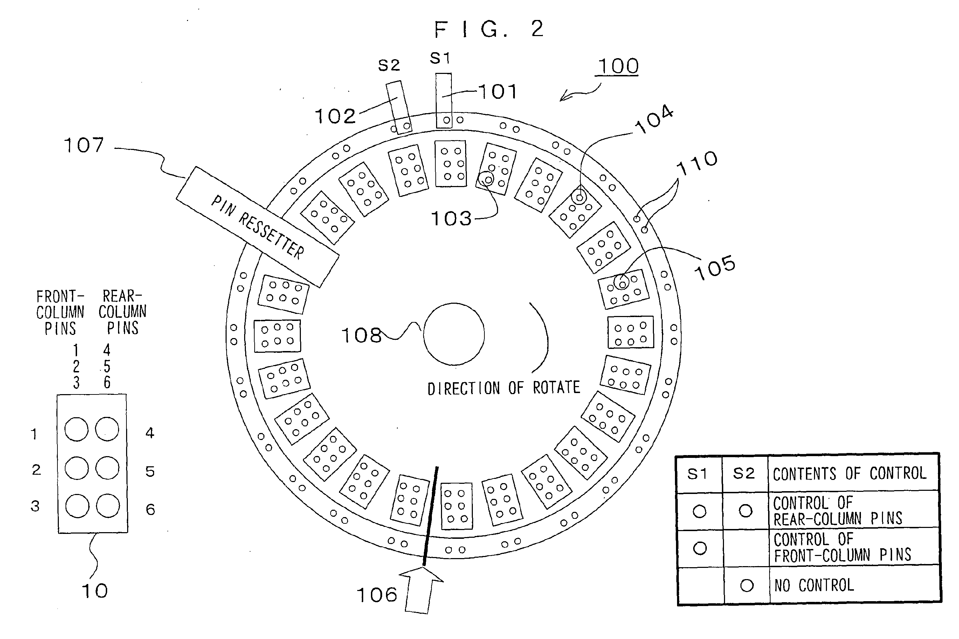

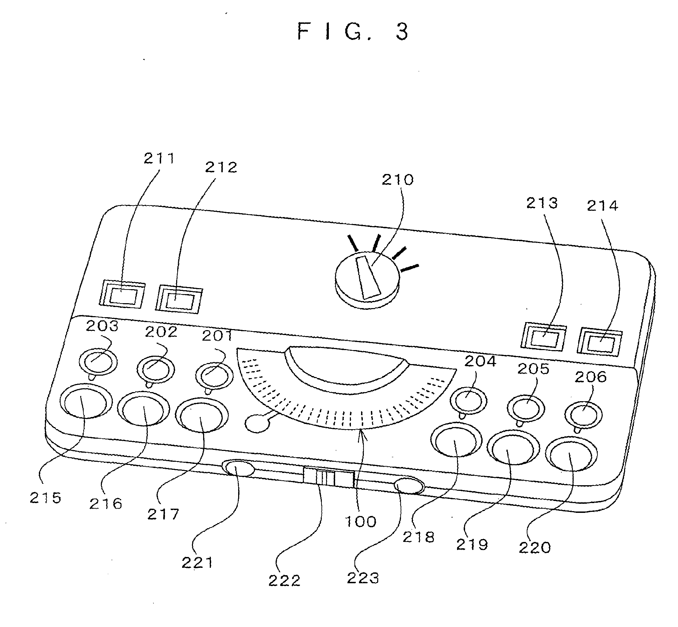

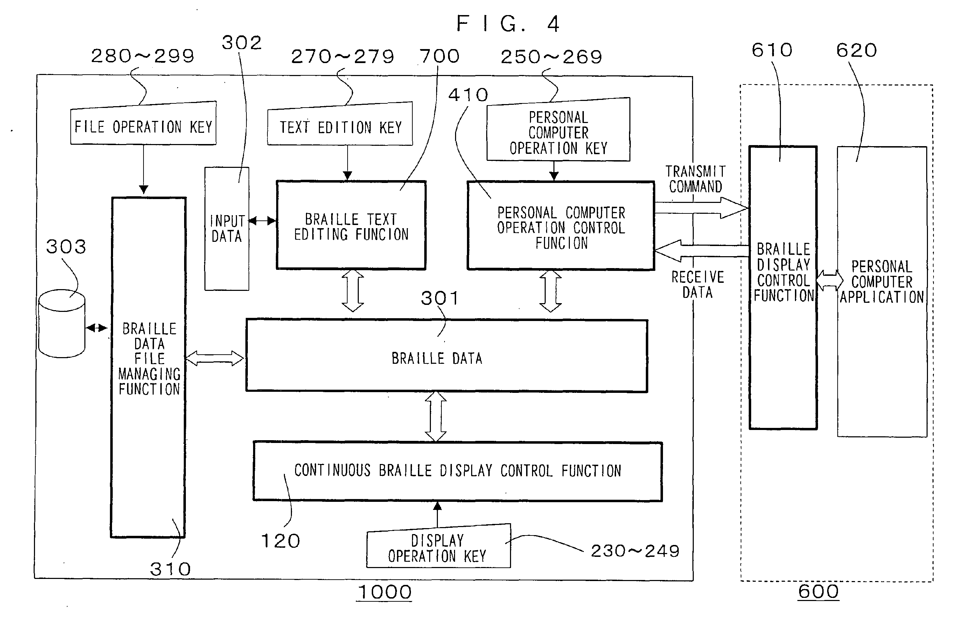

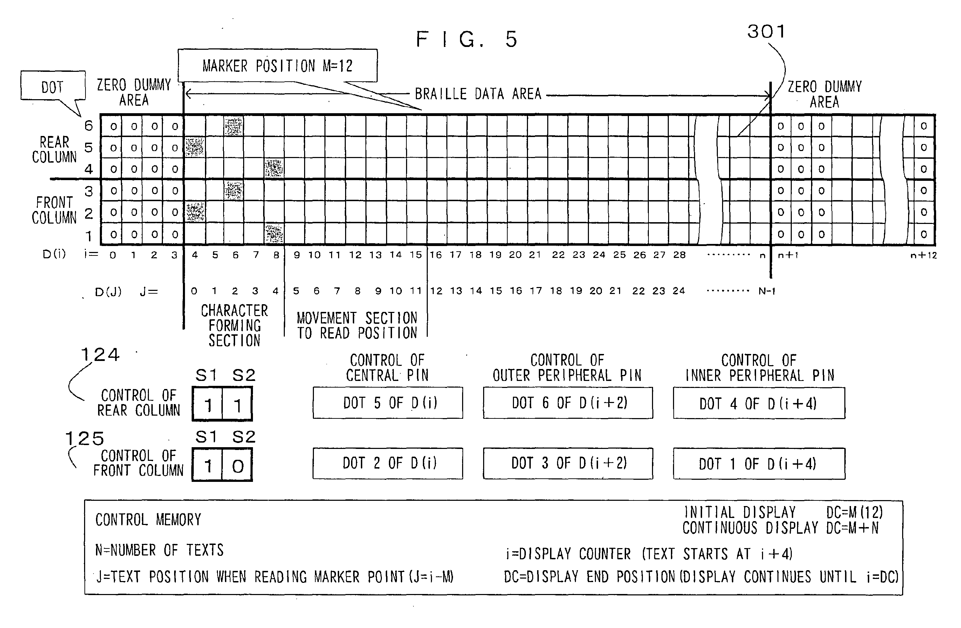

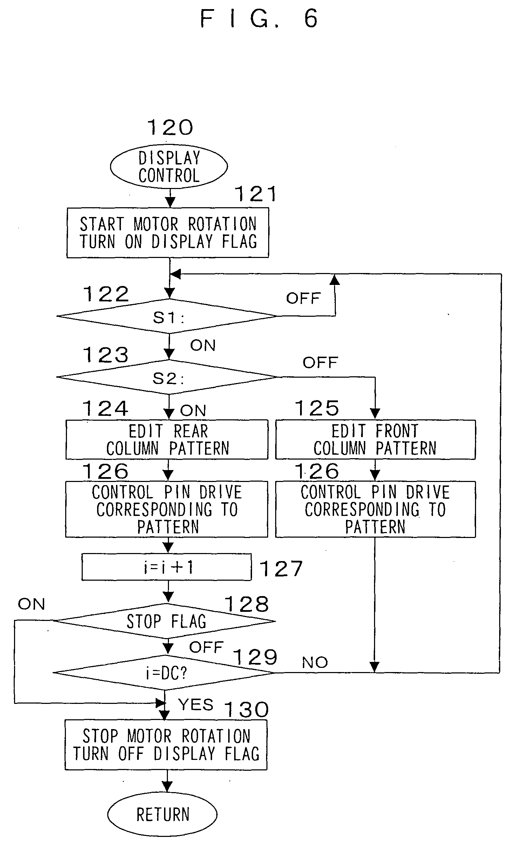

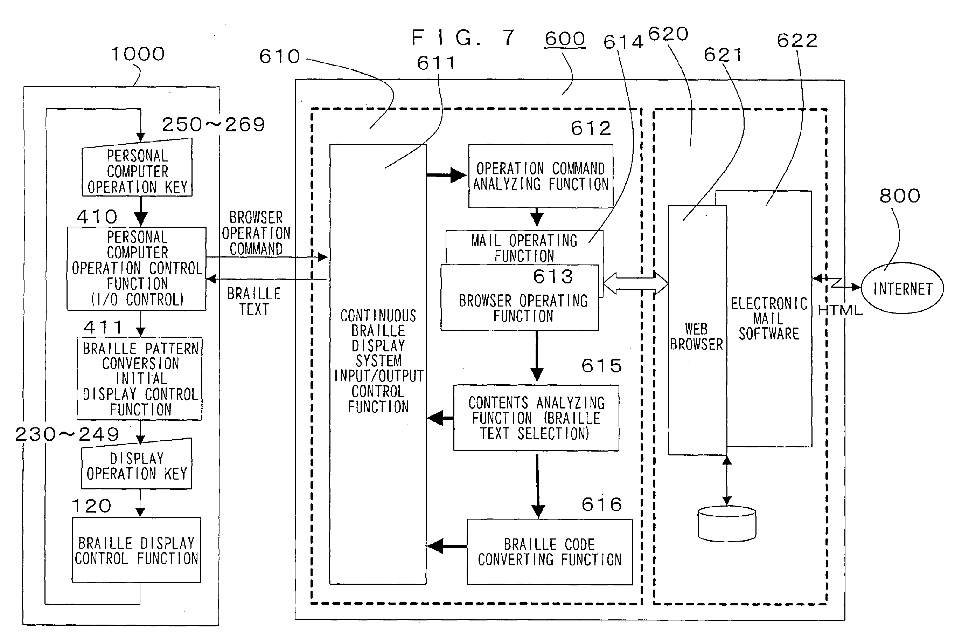

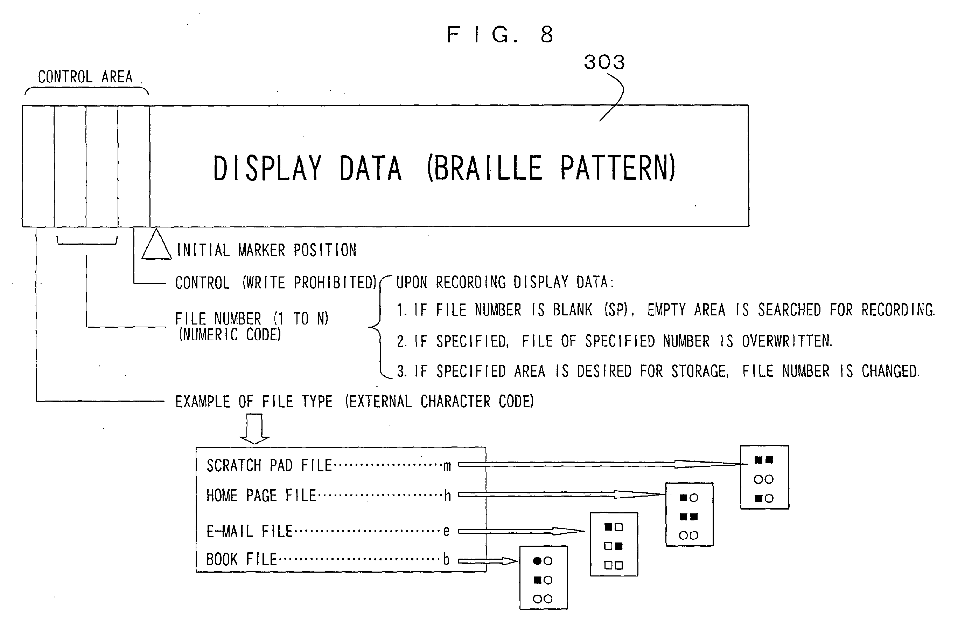

With reference to the drawings, description will be given of a braille display system according to the present invention. FIG. 1 is a block diagram of hardware of a braille display system according to an embodiment of the present invention. FIG. 2 is a plan view of the concept of a rotating braille display section constituting the braille display system according to the present invention. FIG. 3 is a perspective view showing the appearance of the braille display system according to the embodiment of the present invention. FIG. 4 is a functional block diagram of the braille display system according to the embodiment of the present invention. FIG. 5 is a diagram illustrating braille display data for the braille display system according to the embodiment of the present invention as well as a method for controlling the braille display system. FIG. 6 is a flow chart of display control of the braille display system according to the embodiment of the present invention. FIG. 7 is a functional block diagram showing how the braille display system according to the embodiment of the present invention is connected to an external control device. FIG. 8 is a diagram illustrating setting of control information and storage of braille data according to the embodiment of the present invention;

FIG. 1 shows the hardware configuration of a braille display system 1000 that continuously displays braille on a rotating disk. The braille display system 1000 is composed of a rotating disk display section 100 that moves six pins forward and backward per character on a touch-and-sense surface of a rotating disk to continuously display braille, a key input section 200, a memory file section 300, an external interface section 400, and a control section 500 that controls each section using software, all the sections being connected together by a bus. The external interface section 400 is connected to an external control device 600, for example, a personal computer.

The control section 500 uses a CPU to control hardware on the basis of software to provide functions required for the braille display system.

The rotating braille display section 100 has braille characters arranged on the rotating disk at equal intervals in a substantially concentric circular sequence and each consisting of six pins (six convex points) arranged in three rows and two columns. FIG. 2 is a conceptual drawing of an example in which pins for 24 characters are arranged on the disk. Six circles indicate braille pins and are preferably enclosed by a rectangular frame so as to show one braille character.

Moreover, the rotating braille display section 100 has three actuators (not shown) disposed near the rotating disk at intervals in a circumferential direction; the number of actuators is equal to the number of pins in one column in one character. An inner peripheral pin hammer 103 of the first actuator (reference numeral 103 in FIG. 2 denotes a point of action of the pin hammer; this also applies to the other pin hammers) kicks up the pins in the first row from a bottom surface to a top surface of the disk to activate the pins. An outer peripheral pin hammer 104 of the second actuator kicks up the pins in the third row in the same direction to activate the pins. A central pin hammer 105 of the third actuator kicks up the pins in the second row in the same direction to activate the pins. Thus, braille characters are formed which project from the touch-and-sense surface by about 0.5 to 0.7 mm. Accordingly, with this rotating disk continuous braille display system, one braille character consisting of six pins in three rows and two columns can be displayed by using the pin hammers 103, 104, and 105 to activate the pins in the inner periphery, outer periphery, and center, respectively, while rotating the rotating braille display section 100.

The three actuators may be arranged adjacent to one another so as to activate the braille pins of the respective adjacent characters using the pin hammers 103, 104, and 105. However, if the outside dimensions of the actuators are so large that the actuators interfere with one another, they are preferably arranged at intervals. In the example in FIG. 2, the actuators are arranged at intervals of one character. Accordingly, one braille character is formed by rotating the disk clockwise through an angle equal to five characters. Of course, the pins in each of the three rows in one character may be activated using the pin hammers 103, 104, or 105, respectively, though a more complicated structure is required. That is, the arrangement of the pin hammers 103, 104, and 105 does not matter.

Each of the three actuators consists of, for example, a stepping motor and a pin hammer that activates a cam and pins attached to a main shaft of the stepping motor. The main shaft of the stepping motor rotates once in response to a specific number of pulses. Accordingly, the cam rotates once. One rotation of the cam causes the pin hammer to push up and project the pins from the touch-and-sense surface of the disk to a predetermined height.

The disk constituting the rotating braille display section 100 has as many sensor holes 110 as the columns of the braille pins arranged on its outer peripheral portion. In FIG. 2, the number of braille characters displayed on the disk is 24, so that 48 sensor holes 110 are drilled in association with a front and rear columns constituting the braille character. Accordingly, the operations of the pin hammers 103, 104, and 105 are controlled in accordance with detection timings for the sensor holes 110 regardless of the rotation speed of the disk.

A table in the lower right of FIG. 2 indicates the relationship between a sensor S1 (reference numeral 101) and a sensor S2 (reference numeral 102) and operation timings for the pins. As shown in the third section of the table, when the sensor S1 (reference numeral 101) is turned on, operations of the actuators are started. When the sensor S1 is turned on and the sensor S2 (reference numeral 102) is turned off, the pins 1, 2, and 3 in the front column in one character are controlled. As shown in the second section of the table, when the sensor S1 is turned on and the sensor S2 is also turned on, the pins 4, 5, and 6 in the rear column in one character are controlled. As shown in the fourth section of the table, when the sensor S1 is turned off and the sensor S2 is turned on, the pins are not controlled. The pins are preferably controlled using the sensors S1 and S2 as described above.

In this manner, the braille display system according to the present invention rotates the disk to continuously and sequentially display braille on the disk like an electric scoreboard. When a visually handicapped person simply places his or her finger at one position on the disk, the braille characters sequentially come in contact with the thick of the finger of the visually handicapped person. The visually handicapped person can thus continuously sense the characters. As long as the disk continues to be rotated, the visually handicapped person can continuously touch and sense any sentences however long they are. This system does not require a line feeding operation, so that sensing is not interrupted.

Each braille character formed on the disk remains displayed (the pins remain projected from the touch-and-sense surface by about 0.5 mm) until immediately before the position of the pin resetter 107. At the position of the pin resetter 107, the braille character is sequentially reset (the projecting pins are sequentially pushed down by the pin resetter 107). A marker position 106 indicates a position used as a reference for edition of characters or at which a system operator such as a visually handicapped person reads the braille characters. Specifically, a shallowly recessed index portion is formed so that the visually handicapped person can sense it.

Preferably, the rotation speed of the disk of the rotating braille display section 100 can be arbitrarily adjusted by controlling the voltage of a drive motor. Specifically, preferably, the visually handicapped person himself or herself can adjust the number of braille characters that can be touched and sensed by the visually handicapped person as the disk rotates, to within the range from about 100 to 400 per minute. Further, preferably, the forward and reverse rotating operations of the rotating braille display section 100 can be arbitrarily controlled using software by switching the polarity of the disk rotative driving voltage between plus and minus to reversely rotate the disk.

FIG. 3 is a perspective view showing the appearance of the braille display system 1000 according to the present invention. The key input section comprises six braille keys 201 to 206 used to input braille data, a space key 223 and an ENTER key 221, ten function keys used to specify the software functions of the system according to the present invention, that is, ESC keys 211, a CTRL key 212, a DELETE key 213, an INSERT key 214, a forward key 215, a menu key 216, a backward key 217, a next key 218, a STOP key 219, a forward key 220, a speed control key 222 used to control the rotation speed of the disk of the rotating braille display section 100, and a function mode selection switch 210 that can be operated by an operator such as a visually handicapped person while checking the function mode of the system according to the present invention. The function mode is switched among, for example, four types including Internet, e-mail, scratch pad, and book reading.

Preferably, the braille and function keys are based on what is called composite key correspondences in which a combination of two keys provides the function of one key to allow designation of many functions with less key numbers. The number of functions specified is equal to [ (the-number-of-function-keys-th power of 2) -1] x the number of functions selected. For example, if the number of function keys is ten and the number of functions selected is four, the number of functions specified is (2¹⁰-1) x 4 = 4092.

FIG. 4 shows the operation keys assigned on the basis of the above concept. Reference numerals 230 to 249 designate display operation keys. Reference numerals 250 to 269 denote personal computer operation keys. Reference numerals 270 to 279 denote text edition keys. Reference numerals 280 to 299 denote file management operation keys.

The external interface section 400, disposed on one side of a case of the braille display system 1000, may be any type of hardware that can be connected to the personal computer. For example, the external interface section 400 is preferably an RS232C or a USB (Universal Serial Bus) (not shown).

The memory file section 300 has a built-in ROM or flash memory in which text data, braille data, and the like are stored. As an external memory, a memory card, a CD-RAM, a DVD-RAM, or the like can be preferably installed in the memory file section.

FIG. 4 is a block diagram of the software functions of the braille display system 1000. The braille display system 1000 is composed of an arbitrary combination of a continuous braille display control function 120, on which the braille display system 1000 is based, a personal computer operation control function 410, a braille text edition function 700, a braille data file management function 310, and the like.

An external control device 600 (such as a personal computer) comprises a braille display control function 610 and a conventional personal computer application 620. The personal computer operation control function 410, the braille display control function 610, and the personal computer application 620 cooperate with one another in loading output information from the personal computer application into the braille display system 1000 to display it as braille. That is, like visually normal people, visually handicapped people can retrieve information from home pages or e-mails on the Internet, or from electronic information terminal, a cellular phone, or the like to continuously sense the information as braille.

The continuous braille display control function 120 performs the following display control in response to the display operation keys: 1) initial process display and head display, 2) succeeding continuous display, 3) halt, 4) one character forward- step feed ( forward rotation) , 5) one character backward - step back (reverse rotation), 6) setting of a mark for a jump destination, 7) forward jump, 8) backward jump, 9) unit skip, 10) unit skip back, and the like.

Further, the continuous braille display control function 120 uses the rotating disk to control the display by the rotating braille display section 100. The control of the display by the rotating braille display section 100 using the rotating disk must be performed on the basis of the recognition that the position at which each braille character is formed differ from the position at which the braille character is touched and sensed. As shown in FIG. 2, the positions at which the braille pins are drivingly kicked up by the pin hammers 103, 104, and 105 of the three actuators are separated and differ from the marker position 106 at which the braille pins are touched and sensed.

FIG. 5 shows the relationship between braille data and controlled pins (drivingly kicked up by the actuators) and the marker position 106 (braille touch-and-sense position). A zero dummy area spans from the pin resetter 107 of FIG. 2 to a position immediately before the inner peripheral hammer 103. In this area, no braille is formed.

In a character forming section, the braille pins are drivingly kicked up by the hammers 103, 104, and 105. Passage through the character forming section indicates that a braille character has been formed.

A moving section terminating at the read position spans from a position immediately after the character forming section to the marker position 106. This is a reserved section spanning from the formation of a braille character to the actual reading of the character.

In a braille data area, braille data is stored.

The middle and bottom sections of FIG. 5 show the relationship between the sensor S1 (reference numeral 101) and the sensor S2 (reference numeral 102) and pin operation timings, already described using the table in the lower right of FIG. 2.

In FIG. 5, reference character N denotes the number of texts, and reference character i denotes a display counter. Reference character J denotes a position in the text during reading of the marker point (J = i-M) , and reference character DC denotes a display end position (display continues until i = DC).

FIG. 6 shows a control flow on which braille display is based. Display control of an ending block in various displays is a subroutine of a function to continuously show display data from No. i to DC (display end position).

The continuous braille display control function 120 proceeds to a step (reference numeral 121) of causing the disk driving motor to start rotation, a step (reference numeral 122) of waiting for the sensor S1 (reference numeral 101) to be turned on, a step (reference numeral 123) of checking the state of the sensor S2 (reference numeral 102) when the sensor S1 (reference numeral 101) is turned on, a step (reference numeral 125) of editing a character pattern of the front column pins constituting the braille character when the sensor S2 (reference numeral 102) is turned off, and a step (reference numeral 124) of editing a character pattern of the rear column pins constituting the braille character when the sensor S2 (reference numeral 102) is turned on.

The sensor S2 serves to make the operations of the front and rear column pins reliable. Without the sensor S2, the front column pins and rear column pins may be alternately repeated.

In a step (reference numeral 126) of drivingly controlling the pins for the corresponding pattern, the actuators corresponding to the steps 124 and 125 are operated. For the rear column pins, the display counter is incremented (reference numeral 127). Display control keys 232, 233, and 234 set a stop flag. Once this flag is set, an ending process is started (step 128). Continuous display is carried out until the display counter reaches the predetermined number DC of texts (step 129) . Step 130 is a display end processing to stop the rotation of the disk driving motor and display control.

### 1) Initial display control and head display function

When the key input section creates new braille data or the "head display" key 230 is specified, braille is formed starting with the head of the display data. The leading character is moved to the marker portion 106 and then stopped so as to allow the first character to be read. With this control, the display control function is activated when DC = M and i = 0 and when the STOP flag is off. Reference character M denotes a section terminating at the marker position 106, shown in FIG. 2.

### 2) Succeeding continuous display function

When the "succeeding continuous display" key 231 is specified, the braille data is continuously displayed up to its end. The continuous braille display control function 120, shown in FIG. 4, is activated when DC = M + the number of texts and when the STOP flag is off.

### 3) Display stop

This function is provided using the "display stop" 232 key when the STOP flag is on. This control is an interrupt process because it takes place while the continuous braille display function 120 is being executed.

### 4) One character forward

This function forms one character and is then stopped. It is effective while the display is stopped. The "one character forward" key 233 activates the continuous braille display control function 120 when DC = i + 1 and when the STOP flag is on.

### 5) One character backward (reverse rotation of the disk)

The "one character backward" key 234 rotates the motor backward through an angle corresponding to one character. The value i is decremented by one.

### 6) Setting of a mark for a jump destination

This function sets a mark or position indicative of a jump destination, such as a book mark point or a heading (TAB mark) , if a particular position is to be displayed.

To set a book mark, jump destination mark setting keys 235 (as many keys as the types of jumps are assigned) are used to store data on the current marker position 106 as data on the jump destination.

The mark for the jump destination indicates the type and position of the jump.

### 7) Forward jump

"Forward jump" keys 238 (the keys are assigned in accordance with the types of jumps) allow detection of a jump destination located after the marker position 106 and the sub sequent movement to the marker position 106.

### 7) Backward jump

"Backward jump" keys 241 (the keys are assigned in accordance with the types of jumps) allow detection of a jump destination located before the marker position 106 and the subsequent movement to the marker position 106.

### 9) Unit skip

"Unit skip" keys 244 (as many keys as the types of skips) allow data for specified pages, words, or characters (cells 10) to be skipped over. In braille data, a page and a word are formed of spaces (the dots 1 to 6 constituting a character in FIG. 2 are zero) . A page is expressed by a combination of a specific number of or more consecutive spaces, and words are constructed using one or more spaces as a delimiter. For example, a 10-word skip is a function to count spaces from the marker position 106 in the current braille data, then start forming a character once ten spaces have been counted, and subsequently move to the marker position 106. Consecutive spaces are counted as one space. Further, to maintain continuity, the characters present between the marker position 106 and the resetter are skipped over and the formation of characters is started before a read indication point.

### 10) Skip back

"Unit skip back" keys 247 allow the same operation as that of the unit skip to be performed while counting in a direction opposite to that in the unit skip, that is, backward from the current position.

Now, description will be given of a function to use the system 1000 according to the present invention to continuously display text information from, for example, home pages or e-mails on the Internet, as braille for visually handicapped people. In this embodiment, text information from, for example, home pages or e-mails over the Internet is continuously displayed as braille using the personal computer operation control function 410 and the braille display control function 610 and personal computer application function 620 inside the personal computer. Specifically, the operator operates the browser function in the personal computer from the braille display system 1000 to connect to the Internet via the personal computer. The operator thus converts text information from the same home pages as visually normal people view, into braille codes to load the codes into the braille display system 1000. Since visually handicapped people cannot read as-loaded text information easily, the information is converted into braille codes that can be read easily by visually handicapped people. The braille code conversion varies with the country. For example, for Japanese, kanji is converted into kana and spaces are placed between words or between phrases. The kana is then converted into braille codes on the basis of a braille notation. English is converted into visually handicapped people contracted words (second class English) . That is, English uses longer sentences than Japanese or the like, so that words are abbreviated or contracted. Such editions are carried out using a braille code converting function 616. In this manner, the information is converted into braille codes, which are then continuously displayed on the rotating braille display section 100 as braille. Alternatively, the braille codes may be stored in the memory section 300 as braille data.

Thus, the browser operating function for visually handicapped people according to the present invention is characterized by removing image and sound information from original information, while converting only text information into braille codes, and using the rotating disk to continuously display the braille codes, without changing the web browser.

The flow of the control will be described with reference to FIG. 7. First, at the braille display system 1000, the operator pushes an initial home page activation key 250 included in the personal computer operation keys to send an initial home page activation command to the personal computer 600 using the personal computer operation control function 410 (I/O control) . The personal computer 600 uses a continuous braille display system I/O control function 611 to receive the command. The personal computer 600 then uses an operation command analyzing function 612 to select a corresponding browser operation. The personal computer 600 further uses a browser operating function 613 to send the URL (Uniform Resource Locator) of an initial home page to a web browser 621 to activate it. The web browser 621 acquires an HTML (Hyper Text Markup Language) file from a server present on the Internet 800 to make a display based on the HTML file.

A contents analyzing function 615 analyzes the HTML file loaded by the web browser 621. The contents analyzing function 615 removes an image and sound files from the HTML file to select only a text file. The contents analyzing function 615 then divides the text file into a home page text and a link file. If this data is a file adapted for braille, the contents analyzing function 615 sends the file to a continuous braille display system I/O control function 611 as it is. If the data is a normal text file, a braille code converting function 616 executes the previously described conversion on the data. The braille code converting function 616 then sends the braille data obtained to the continuous braille display system I/O control function 611.

The continuous braille display system I/O control function 611 converts the braille data intoNABCCs (North American Braille Computer Codes). The continuous braille display system I/O control function 611 then sends the codes obtained to the braille display system 1000.

In the braille display system 1000, the personal computer operation control function 410 receives the braille text from the personal computer 600. Then, a braille pattern conversion initial display control function 411 converts the text into a braille pattern and then performs initial display control 411. Specifically, the leading character of the data loaded from the home page is advanced to the marker position 106 so that the braille characters can be touched and sensed (read).

The operator uses the display operation keys 230 to 249 to read the contents of the home page in accordance with the continuous braille display control function 120. Then, the operator uses the personal computer operation keys 250 to 269 to operate the browser of the computer. The operator then uses a link menu key 251 to advance the link information to the next piece via a TAB key 252 or return to the preceding link information via a back TAB key 253. The operator can execute a similar procedure to continuously display arbitrary link information as braille. The operator can also use the ENTER key 221 (FIG. 3) to continuously display the corresponding link information as braille.

Using a method similar to that for selecting link information, the operator can also select favorite using a key 254 for returning to the home page preceding the web browser function, a key 255 for advancing the returned-to home page to the next one, a favorite registration key 256, and a favorite display key 257.

The operator can use a home page recording key 258 to store the contents of the home page in a recording file 303 of the system 1000 according to the present invention as a home page file.

The operator can also deal with e-mails using a method similar to that for processing home pages. In FIGS. 4 and 7, at the braille display system 1000, the operator pushes an e-mail activation key 260 to send an e-mail activation command to a personal computer 620 using the personal computer operation control function 410 (I/O control). The personal computer 620 uses the continuous braille display system I/O control function 611 to receive the command. The personal computer 620 then uses the operation command analyzing function 612 to select a mail operating function. The personal computer 620 then uses the main operating function 614 to activate e-mail software 622 in the personal computer application 620 to acquire a mail list or mail document corresponding to the mail operating function 614 from a server.

The contents analyzing function 615 analyzes the mail list or document loaded by the e-mail software 622. The contents analyzing function 615 then removes an image and sound files from the mail list or document to select only text data. The contents analyzing function 615 then sends converted braille data to the continuous braille display system I/O control function 611. The continuous braille display system I/O control function 611 converts the braille data into NABCCs. The continuous braille display system I/O control function 611 then sends the NABCCs to the braille display system 1000.

In the braille display system 1000, the personal computer operation control function 410 receives the braille text from the personal computer. Then, the braille pattern conversion initial display control function 411 converts the text into a braille pattern and then performs initial display control. Specifically, the leading character of the data loaded from the e-mail software is advanced to the marker position 106 so that the braille characters can be touched and sensed.

The operator can use the display operation keys 230 to 249 to read the contents of the mail list or document in accordance with the braille display control 120.

At the beginning of activation of an e-mail, the contents of the mail list are displayed. The operator then uses a next personal computer operation key to select a list to be read. The list to be read is selected using a next mail list key (all mails) 261, a preceding mail list key (all mails) 262, a next mail list key (unread mail) 263, and a preceding mail list key (unread mail) 264.

The operator can use the ENTER key 221 (FIG. 3) to decide the mail list and read the mail document (mail text). Further, the operator can use a mail recording key 265 to store the mail document in the recording file 303 of the system according to the present invention as a mail file.

A braille text editing function 700 can carry out editions such as creation or modification of a braille document or deletion of any data from a braille document, in response to the braille input keys 201 to 206 or the braille text edition keys 270 to 275. The braille text editing function 700 can be utilized as a scratch pad, a telephone directory, an address book, or a memorandum for visually handicapped people.

The operator pushes the braille text edition start key 270 to initialize (clear) inputdata. Creation of a new document is then started.

If an existing braille document is to be edited, the operator performs a braille file reading function, described later, to set a braille document to be edited, as braille data. The operator then uses the display operation keys 230 to 249 to advance an edition start point to the marker position 106. Editions are carried out using the data corresponding to the marker position 106 as a base point.

For braille inputs, a character creation period is considered to the time during which one or more of the braille input keys 201 to 206, shown in FIG. 3, areconsecutivelypressed. During this period, information on keys pushed at different times is also used to form characters. When no keys are touched, the logical sum of the hitherto pushed keys is stored in an input data area. The braille edition keys are stored in the input data area as edition codes in the same manner as described for the braille data.

The contents of the braille edition keys will be described below. The INSERT key 271 inserts braille data corresponding to this code and subsequent data. The DELETE key 272 deletes data from a corresponding position. The overwrite edition key 273 overwrites and modifies braille data corresponding to this key and subsequent data. The operation cancel key 274 deletes the last braille code or the code of the last edition key in the input data area.

The operator edits the braille data by pushing the ENTER key 221, shown in FIG. 3, to incorporate the input data into the braille data using that part of the braille data which corresponds to the marker position 106 as a base point. Subsequently, the operator can controllably display the edited contents up to the marker position 106. The operator can then use the display control keys 230 to 234 to check the edited contents. The operator can use the recording key 275 to store the edited braille data in a predetermined file. The storage in the file is preferably controlled with reference to management of a braille data file, described below.

A management function 310 for the braille data file allows the operator to use the continuous braille display control function 120 to read specified braille information such as braille information obtained from home pages or e-mails using the personal computer operation control function 410, braille information created using a braille text editing function 700, or information from an information recording medium (braille book/book) having book data. The management function 310 also stores the braille data mentioned above for the text edition, in the recording file 303 (FIG. 4) of the braille display system 1000.

The operator can read braille data stored in the recording file 303 using the scratch pad file read key 280, the home page file read key 281, the mail file read key 282, and the book file read key 283. During initial display control, the operator can use the display operation keys 230 to 249 to read the contents of the file.

The operator uses the next file read key 285 to display the contents of the same file type in order of ascending file number. The operator uses the preceding file read key 286 to display the contents of the same file type in order of descending file number.

For the head of the display data, the operation of storing the display data can be simplified by setting the control information (file type, file number, and control code) shown in FIG. 8. The control information can be modified using the text editing function. The braille data is stored in a predetermined file in accordance with the control information.

If there is no file number, an empty area for that file type is searched for and a file number is provided for the empty area. If there is any file number, the area corresponding to that number is overwritten, with the data saved. If the data is to be stored in a specified area, the file number is changed.

In the above embodiment, the braille display control function 610 is provided in the external control device 600 (personal computer). However, the present invention is not limited to this configuration. The function 610 may be provided in the braille display system 1000.

With the above configuration, the braille display system according to the present invention enables the operator to continuously sense text information from, for example, home pages or e-mails on the Internet as braille. Further, by loading book data or the like from an information recording medium into the braille display system of the present invention via a personal computer or installing the information recording medium in the braille display system of the present invention, the operator can arbitrarily convert information from the information recording medium into braille and sense it. Moreover, the operator can operate both braille input keys and edition keys to create or modify a braille document or delete any data from the braille document. The display system according to the present invention can be utilized as a scratch pad for visually handicapped people. Moreover, the operator can sense the text information at an arbitrary braille display speed starting with an arbitrary text position.

### (Embodiment 2)

In the description of Embodiment 1, the braille display system enables the operator to use the external control device to continuously sense text information fromhome pages or e-mails on the Internet or book data from an information recording medium, as braille. However, the present invention is not limited to this field but can be used as a general-purpose braille display terminal that is applicable to other electronic apparatuses.

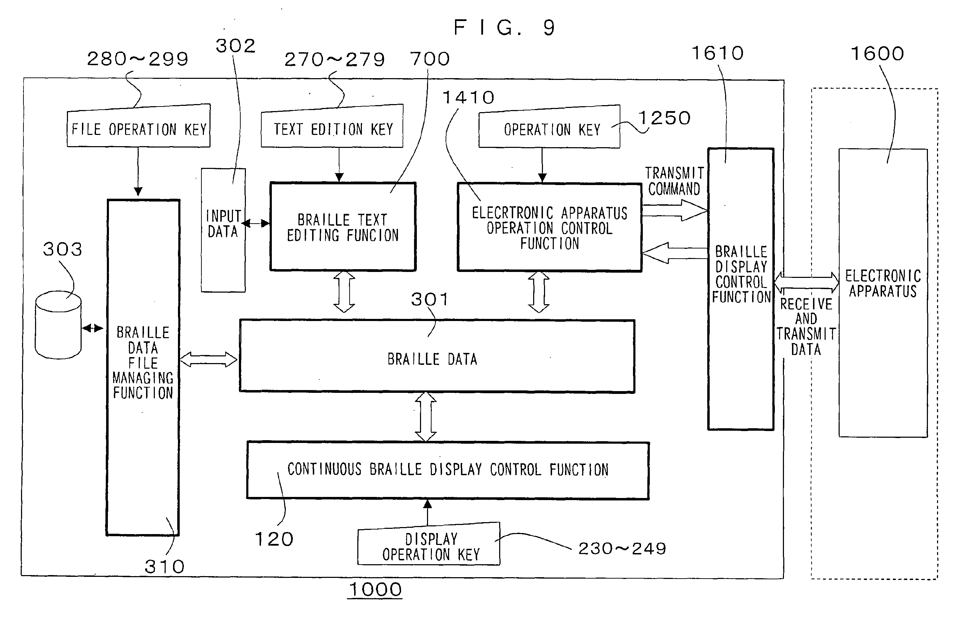

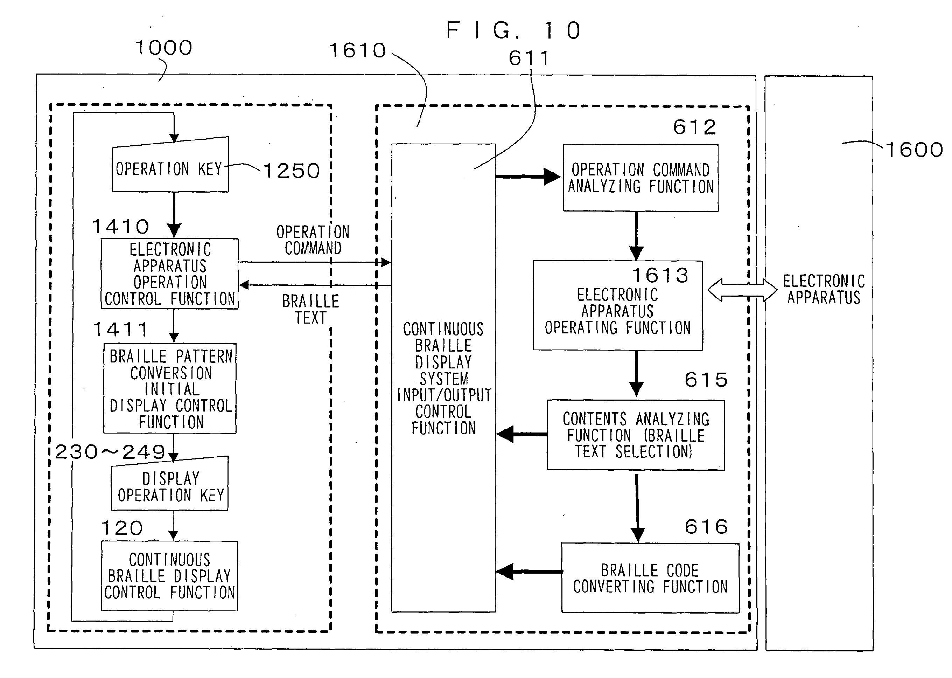

FIG. 9 is a functional block diagram of a braille display system according to Embodiment 2 of the present invention. FIG. 10 is a functional block diagram showing how the braille display system according to Embodiment 2 is connected to an electronic apparatus. The same functional blocks as those in Embodiment 1 are denoted by the same reference numerals, with their detailed description omitted.

In Embodiment 2, data is transmitted between the braille display system 1000 and an electronic apparatus (external control device) 1600 via an interface (not shown) . The braille display system 1000 and the electronic apparatus 1600 may be connected together via a cable or by radio using infrared rays, electric waves, or the like.

Examples of the electronic apparatus 1600 include, besides the previously described personal computer, a cellular phone, a PDA, an automatic cash transaction device, a ticket machine, a vending machine, an electronic book reader, a facsimile machine, a braille learning machine, an electronic voting device, or a navigation device.

An electronic apparatus operation control function 1410 has built-in functions to operate and control the electronic apparatus 1600. An operation key 1250 is operated to transmit an operation command for controlling the electronic apparatus 1600, to a braille display control function1610. The operation key 1250 includes an activation key, a menu key, a TAB key, a back TAB key, an ENTER key, and the like assigned to each of the electronic apparatuses 1600. Besides, unique operation keys are assigned to the respective electronic apparatuses; for example, a code number input key is assigned to the automatic cash transaction device, a settlement key for electronic settlement is assigned to the ticket machine and vending machine, and a communication status check key is assigned to the facsimile machine.

The braille display control function 1610 provides the same function as in Embodiment 1, previously described. An activation command from the electronic apparatus operation control function 1410 is inputted to the continuous braille display system I/O control function 611. The continuous braille display system I/O control function 611 inputs the activation command to the operation command analyzing function 612. The operation command analyzing function 612 determines that the inputted command activates the electronic apparatus 1600. The operation command analyzing function 612 then sends a command to activate the electronic apparatus 1600, to an electronic apparatus operating function 1613. When the electronic apparatus 1600 is activated, an initial menu is sent to the electronic apparatus operating function 1613.

The contents analyzing function 615 analyzes the initial menu loadedby the electronic apparatus operating function 1613. The contents analyzing function 615 removes an image and sound files from the initial menu to select only a text file. If this data is a file adapted for braille, the contents analyzing function 615 sends the file to the continuous braille display system I/O control function 611 as it is. If the data is a normal text file, the braille code converting function 616 executes the previously described conversion on the data. The braille code converting function 616 then sends the braille data obtained to the continuous braille display system I/O control function 611.

The continuous braille display system I/O control function 611 converts the braille data into NABCCs (North American Braille Computer Codes). The continuous braille display system I/O control function 611 then sends the codes obtained to the braille display system 1000.

In the braille display system 1000, the electronic apparatus operation control function 1410 receives the sent NABCCs. Then, the braille pattern conversion initial display control function 411 converts the codes into a braille pattern and then performs initial display control. Specifically, the leading character of the data loaded from the electronic apparatus 1600 is advanced to the marker position 106 so that the braille characters can be touched and sensed (read).

The operator uses the display operation keys 230 to 249 to read the contents of the initial menu of the electronic apparatus 1600 in accordance with the continuous braille display control function 120. Then, the operator uses the operation keys 1250 to 1269 to operate the electronic apparatus 1600. The operation of the electronic apparatus 1600 varies with the type of the electronic apparatus 1600. For example, substantially the same operation as the one performed on a mail from the personal computer is carried out on a mail from a cellular phone. The operator selects a message to be viewed from a list screen of messages. The operator can then use the ENTER key 221 to decide a mail list and read a mail document (text). For the automatic cash transaction device, the ticket machine, or the vending machine, the operator selects a required menu from the contents of the initial menu. Depending on the apparatus, the operator then selects a code number, the type of a ticket to be purchased, a settlement method, or the like in accordance with the contents of the menu.

The braille display system according to the present invention can be connected to a personal computer to allow a user to view home pages or the like on the Internet. The braille display system according to the present invention can also be utilized as a braille display terminal for mobile Internet which cooperates with a cellular phone or a PDA. The braille display system according to the present invention can also be utilized as a braille display terminal for various electronic apparatuses such as an automatic cash transaction device, a ticket machine, an electronic book reader, a facsimile machine, a braille learning machine, an electronic voting system, or a navigation system.

## Claims

1. A braille display system comprising a rotating braille display section including a plurality of braille display pins capable of moving forward and backward, a key input section, an external interface section, and a memory section, wherein
the system further comprises:
a controller for allowing the rotating braille display section to use a plurality of actuators arranged at intervals in a circumferential direction of a rotating member, thereby to continuously display braille on a touch-and-sense surface of the rotating member in a substantially concentric circular sequence;
a unit for holding a displayed state of the braille through a predetermined rotation angle of the rotating member; and
a pin resetter located downstream in a rotating direction of the rotating member thereby to reset a braille display pin to an initial state.

2. The braille display system according to claim 1, the system further comprising:
a pair of sensor holes formed in association with each column defining a braille square and two sensors arranged in association with a spacing between the pair of sensor holes, thereby to control braille forming pins,
the two sensors operating to identify control timings of the front and rear columns in the braille square so that the actuators arranged at intervals are controlled to convert contents of a braille memory to form braille during a continuous rotation of the rotating member.

3. The braille display system according to claim 1, the system further comprising:
a unit for connecting an external controller to the external interface section to allow the key input section to be operated to transmit a text information request command to the external controller so that text information from the Internet or text information from e-mails is loaded from the external controller and then stored in a memory file section; and
a unit for outputting the text information to the rotating braille display section as braille.

4. The braille display system according to claim 1, the system further comprising:
a unit for loading text information from the external control device and outputting braille to the rotating braille display section, in response to an operation of the key input section;
a unit for loading text information from the external control device and storing the loaded text information in the memory section, in response to an operation of the key input section;
a unit for calling the text information from the memory section and displaying the braille on the rotating braille display section, in response to an operation of the key input section;
a unit for editing text information in response to an operation of the key input section;
a unit for creating braille data in response to an operation of the key input section; and
a unit for creating braille data and storing the created braille data in the memory section, in response to an operation of the key input section.

5. The braille display system according to any one of claims 1 to 4, system further comprising:
a unit for stopping the rotating braille display section at an arbitrary position during rotation thereof in response to an operation of the key input section;
a unit for moving the rotating braille display section forward on a character-by-character basis in response to an operation of the key input section; and
a unit for moving the rotating braille display section backward on a character-by-character basis in response to an operation of the key input section.

6. The braille display system according to any one of claims 1 to 4, the system further comprising:
a jump mark setting unit for setting a jump destination mark of a book mark point in text information;
a mark jump unit for allowing the text information to be skipped over to the jump destination mark of the book mark point or to be read backward to the mark;
a unit for allowing the text information to be skipped over on a page-by-page basis, a word-by-word basis, or a particular-frame-by-frame basis; and
a unit for allowing the text information to be read backward on a word-by-word basis.

7. The braille display system according to any one of claims 1 to 4, wherein the key input section comprises data input keys, function keys for operating various functions, a rotation speed control key for controlling a braille speed, and a mode key for allowing a system operator to check a state of text information processing and select a function.

8. A braille display system connected to an external control device to transmit and receive signals to and from the external control device, the external control device incorporating conversion software for converting a plain text into braille codes, wherein
the external control device includes a transmitter for transmitting the braille codes to a braille display section, and
the braille display system further comprises a braille former for projecting and withdrawing a plurality of pins to convert the braille codes transmitted from the external control device into braille, and a braille display unit for continuously displaying the braille by arranging braille characters in a side-by-side and endless sequence.

9. A braille display system connected to an external control device to transmit and receive signals to and from the external control device, the external control device including conversion software for converting a plain text into braille codes, wherein
the external control device includes a transmitter for transmitting the braille codes to a braille display section, and
the braille display system further comprises:
a control operating unit for operating an operation key and transmitting to the external control device a command for activating the conversion software;
a braille former for converting the braille codes transmitted from the external control device into braille by projecting and withdrawing a plurality of pins; and
a braille display unit for continuously displaying the braille by arranging braille characters in a side-by-side and endless sequence.

10. A braille display system connected to an external control device to transmit and receive signals to and from the external control device in which browser software is allowed to browse a home page over Internet, wherein
the external control device comprises:
conversion software for converting a text of the home page into braille codes;
a transmitter for transmitting to the braille display system the braille codes converted by the conversion software;
a controller for transmitting a command to an external control device to activate the conversion software by operating an operation key;
a braille former for converting the braille codes transmitted from the external control device into Braille by projecting and withdrawing a plurality of pins; and
a braille display unit for continuously displaying the braille by arranging the braille characters in a side-by-side and endless sequence.

11. A braille display system connected to an external control device to transmit and receive signals to and from the external control device in which e-mail software is allowed to browse an e-mail, wherein
the external control device comprises:
conversion software for converting a text of the e-mail into braille codes;
a transmitter for transmitting to the braille display system the braille codes converted by the conversion software;
a controller for transmitting a command to the external control device to activate the e-mail by operating an operation key;
a braille former for converting the braille codes transmitted from the external control device into braille by projecting and withdrawing a plurality of pins; and
a braille display unit for continuously displaying the braille by arranging the braille characters in a side-by-side and endless sequence.

12. A braille display system that transmits and receives signals to and from an external control device, the system comprising:
conversion software for converting a signal from the external display device into braille codes;
a transmitter for transmitting the braille codes converted by the conversion software, to the braille display system;
a controller for transmitting a command to the external control device to activate the external control device by operating an operation key;
a braille former for converting the braille codes transmitted from the transmitter into braille by projecting and withdrawing a plurality of pins; and
a braille display unit for continuously displaying the braille by arranging the braille characters in a side-by-side and endless sequence.

13. The braille display system according to any of claim 10, 11, or 12, wherein the conversion software for converting the signal from the external control device into braille codes comprises a contents analyzing function and a braille code converting function.

14. The braille display system according to any of claim 10, 11, or 12, wherein the transmitter for transmitting braille codes to the braille display system comprises a contents analyzing function and a continuous braille display system input/output control function for converting braille data transmitted by the braille code converting function into NABCCs .
